# EUROPEAN PATENT SPECIFICATION

(11) **EP 3 307 089 B1**
(45) Date of publication and mention of the grant of the patent: **05.12.2018**
(21) Application number: 16730785.9
(22) Date of filing: 13.06.2016
(51) Int. Cl.: A23L 23/00, A23L 29/238

(54) **FOOD PRODUCT**
FLÜSSIGE O/W EMULSION WELCHE HYDROLISIERTE GELATINE ENTHÄLT
LIQUIDE HUILE-DANS-EAU EMULSION COMPRENANT DE LA GÉLATINE HYDROLYSÉE

(30) Priority: 15.06.2015 EP 15172204
(43) Date of publication of application: 18.04.2018
(73) Proprietor: Unilever N.V., 3013 AL Rotterdam (NL); Unilever PLC, a company registered in England and Wales under company no. 41424 of, London EC4Y 0DY (GB)
(72) Inventor: KIM, Hyun-Jung, 3133 AT Vlaardingen (NL); LEMMERS, Marc, 3133 AT Vlaardingen (NL); ROSINSKI, Mariusz, 74074 Heilbronn (DE); SAILER, Winfried, 74074 Heilbronn (DE)
(74) Representative: Tjon, Hon Kong Guno
(86) International application number: PCT/EP2016/063461
(87) International publication number: WO 2016/202725

(56) References cited:
- WO-A1-2015/091220
- WO-A2-03/095636
- FR-A1- 2 658 037
- JP-A- 2000 014 367
- US-A1- 2010 323 081
- Anonymous: "Kochanleitung Saucen", , 30 June 2013 (2013-06-30), pages 1-15, XP002743069, Retrieved from the Internet: URL:https://web.archive.org/web/2013060318 4833/http://www.aurant.de/kochanleitung/sa ucen [retrieved on 2015-08-03]
- Hervé This-Benckhard: "Kulinarische Geheimnisse", 1 January 1997 (1997-01-01), Springer, Berlin, XP002743070, pages 110-111, the whole document

## Description

### Field of the invention

The present invention relates to a food product in the form of a pourable liquid emulsion, more specifically a pourable liquid emulsified sauce with a high amount of salt.

### Background of the invention

Liquid sauces with a high amount of salt like soy sauce are well known in the art. Even thickened soy sauces have been described. US 3 598 614 discloses a thickened sauce based on the addition of 4% glutinous rice starch, tapioca starch and 0.3% gelatine powder to soy sauce. Except of the increased viscosity the appearance is as dark as normal soy sauce. A more creamy appearance may be obtained by creating an oil in water emulsion. However, oil in water emulsions are typically difficult to stabilise, in particular at high concentrations of salt.

US 4 794 015 discloses thickened sauce in the form a high salt oil in water emulsion stabilised with glycero phospholipid, a mixture or 95% lyso phosphatidylcholine and 2% of lyso phosphatidylethanolamine obtained after acetone precipitation and ethanol fractionation. The results in Table 1 show that while oil separation is low, the bottom aqueous phase typically separated out (serum separation) which needed to be redispersed into the creamy phase. Such products with up to 37% serum separation - especially when packaged in transparent packaging - would be unattractive for most consumers despite the reported ease for redispersion. In addition, the process for preparing these unstable emulsions was rather complex and typically required relative expensive equipment like high pressure homogeniser, colloid mill, the addition of e.g. modified starch or the use of high temperatures. Another disadvantage is that glycero phospholipids are not perceived by many consumers as a natural ingredient.

Surprisingly, the present invention provides a liquid oil in water (O/W) emulsion without the need for, high processing temperature, the use of high pressure homogeniser or colloid mill while the emulsion is stable with minimal serum separation without the need for glycero phospholipids. This allows for much lower equipment costs while using less energy per unit product. For multinational manufacturers with multiple processing locations this offers an increased flexibility as simple mixers are available at all processing locations while more expensive colloid mills and high pressure homogenisers are usually limited available if at all. The invention uses gelatine hydrolysate which has been disclosed for use as a clarifying agent to prevent frozen aspic (a solid gel made with 10% gelatine) to become turbid after thawing (WO9307762A1) and as an agent to decrease cross-linking in gelatine based pharmaceutical capsules (EP 1 885 771).

### Summary of the invention

The present invention provides a pourable liquid oil-in-water emulsion comprising
a at least 10 wt% gelatine hydrolysate by weight of the total amount of water
b 10 to 30 wt% of salt by weight of the total amount of water
c oil, and
d water in an amount of at least 15 wt% by weight of the total composition, such that the ratio of oil to water (w/w) is 0.8 to 3.

The present invention further includes a process to prepare the pourable liquid emulsion according to the invention as described below.

### Detailed description of the invention

### Emulsion

The pourable liquid emulsion according to the invention is preferably an oil-in-water emulsion with high amount of salt and a relatively high ratio of oil to water as described below. It is not a solid like a gel but a pourable liquid so it can be used as a sauce, a marinade or a dip. Surprisingly the inventive emulsion shows minimal serum separation without the need for glycero phospholipids despite the relatively high amount of salt. The term glycero phospholipid is meant to describe a mixture of mono acyl glycero phospholipid and di-acyl glycero phospholipid for example lysophosphatidyl choline and lyso phosphatidylethanolamine. Preferably the emulsion according to the present invention comprises less than 0.1 wt% of glycero phospholipids, more preferably less than 0.01wt% of glycero phospholipids by weight of the total amount of oil. The more inventive emulsion comprises gelatine hydrolysate, salt, water and oil as described below. The inventive emulsion can be used as seasoning, marinade, dip, sauce, soup base for cold and hot application, used diluted or as such.

Surprisingly the inventive emulsion shows remarkable serum separation stability without the need for e.g. stabilisers like modified starch. Preferably the emulsion according to the present invention comprises less than 1 wt% of modified starch, more preferably less than 0.1 wt% of modified starch by weight of the total amount of water. The total amount of water includes water added as such or as part of another ingredient. Preferably, the emulsion according to the present invention comprises less than 1 wt% of polysaccharide gum, more preferably less than 0.1 wt% of polysaccharide gum by weight of the total amount of water. Stabilising gums include e.g. xanthan, galactomannan, carrageenan. Preferably the emulsion according to the present invention comprises less than 1wt% of gelatine, more preferably less than 0.1 wt% of gelatine by weight of the total amount of water.

### Gelatine hydrolysate

Gelatine hydrolysate may be obtained from various sources including pork, beef, fish, poultry. The gelatine hydrolysate may be obtained by methods known in the art such as acidic hydrolysis (type A), alkali hydrolysis (type B), prolonged heating and enzymatic hydrolysis. One method comprises hydrolysing gelatine with proteolytic enzymes having endopeptidase activity followed by digestion with a proteolytic enzyme having exopeptidase activity. Generally, the endopeptidase and exopeptidase proteolytic digestions proceed for a sufficient length of time and are conducted under reaction conditions so as to form a gelatine hydrolysate suitable for this invention. Gelatine hydrolysates are commercially available e.g. from Gelita AG (Germany) and Rousselot. Preferably, the gelatine hydrolysate used in the present invention is type A and of pork origin. Preferably, the gelatine hydrolysate has a bloom strength of 0, as defined by a bloom strength test, preferably ISO 9665. Preferably the hydrolysed gelatine has an average molecular weight of below 20 kg/mol, more preferably below 15 kg/mol, and preferably above 0.15 kg/mol, more preferably above 0.5 kg/mol, even more preferably above 1 kg/mol. The composition of the present invention comprises at least 10 wt%, preferably at least 13 wt%, preferably at least 15 wt% and preferably at most 40 wt%, preferably at most 35 wt%, more preferably at most 30 wt%, more preferably at most 25 wt% of gelatine hydrolysate by weight of the total amount of water. The total amount of water includes water added as such or as part of another ingredient. For the avoidance of doubt, the wt% of gelatin hydrolysate by weight of the total amount of water is calculated as 100%* (amount of gelatin hydrolysate/(total amount of water+ amount of gelatin hydrolysate)). Gelatine hydrolysate could also be added to formulation by gelatine hydrolysate rich ingredients like specialised soup stocks with unusual high amounts of gelatine hydrolysate (e.g. from Protell Foods AB). Ordinary soup stocks have much lower amounts of gelatine hydrolysate if any because the hydrolysis of gelatine requires more extensive and therefore expensive processing which is too costly for ordinary soup stocks.

### Water

The amount of water in the emulsion is intended to refer to the total amount of water in the emulsion, i.e. including both water added as such and water as part of another food ingredient like soy sauce. The amount of water is at least 15 wt%, preferably at least 20 wt%, preferably at least 30 wt%, preferably at least 40 wt% and preferably at most 65 wt%, preferably at most 55 wt%, preferably at most 50 wt% by weight of the total composition. If soy sauce is used, it is preferably present in an amount of at least 35 wt%, preferably at least 40 wt%, preferably at least 45 wt% and preferably at most 60 wt%, preferably at most 60 wt%, preferably at most 55 wt% by weight of the total composition.

### Oil

The term "oil" as used in the present application refers to a triglyceride composition which is liquid at 25°C, as long as it is suitable for preparing an emulsion. Examples are edible oils derived from sources like olive, sunflower, soy bean, corn, sesame, rapeseed, palm, palm kernel, coconut, cotton seed and mixtures, fractions and derivatives thereof. Preferably the amount of oil is at least 20 wt%, preferably at least 30 wt%, more preferably at least 40 wt% and preferably at most 75 wt%, preferably at most 55 wt%, more preferably at most 50 wt% by weight of the total composition.

### Ratio of oil to water

The ratio of oil to water (w/w) is preferably at least 0.8 preferably at least 0.9 preferably at least 1, preferably at least 1.1 and preferably at most 3, preferably at most 2.5, preferably at most 2.

### Salt

The term salt refers to NaCl and/or KCl. Preferably the amount of salt is at least 10 wt%, preferably at least 13 wt%, preferably at least 15 wt% and preferably at most 30 wt%, preferably at most 25 wt% by weight of the total amount of water in the composition. Total water includes water added as such are as part of other ingredients like soy sauce. For the avoidance of doubt, the wt% of salt by weight of the total amount of water is calculated as 100%* (amount of salt/(total amount of water+ amount of salt)).

A pourable liquid oil-in-water emulsion according the invention preferably comprises
a) at least 15 wt% and at most 25wt% gelatine hydrolysate by weight of the total amount of water, preferably having an average molecular weight of below 20 kg/mol and more than 0.5 kg/mol.
b) 10 wt% to 30 wt% of salt by weight of the total amount of water
c) 30 w% to 50wt% of oil by weight of the total composition,
d) 30 w% to 50wt% water, by weight of the total composition,
such that the ratio of oil to water (w/w) is at least 1 and at most 2;
whereby preferably at least some of the water is added as soy sauce whereby the soy sauce is present in an amount of at least 35 wt% and preferably at most 55 wt% by weight of the total composition.

### Process to prepare an emulsion

The invention includes a process to prepare the inventive emulsion comprising the steps of
a) providing a mixture of water, salt and gelatine hydrolysate
b) admixing oil to said mixture
c) homogenising the oil and said mixture to form an oil in water emulsion

Surprisingly, the stable emulsion according to the invention can be obtained with simple mixer without the need for a high pressure homogeniser or colloid mill. In addition, there is no need to apply active heating in the manufacture of the inventive emulsion.

Preferably, the process is carried out without active heating. If mixing causes the temperature to increase, the temperature during the process is preferably kept at less than 50 °C, preferably at a temperature of less than 40 °C, preferably at a temperature of less than 35 °C. If a stock solution is used as a source of gelatine hydrolysate, it may be heated first to dissolve/dilute it but it is preferably cooled to less than the temperatures describe above before using it in the inventive process. Step c is preferably not carried out in a high pressure homogeniser or colloid mill.

### Stability protocol

Stability is measured by pouring the sample into a measuring cylinder (100 ml, 2.5cm diameter). The samples are visually monitored for oil separation and serum separation after at least 5 days or more preferably after at least 7 days of storage at 22°C (room temperature). Serum separation is considered acceptable if it is less than 5 vol%, preferably less than 1 vol% as determined with the measuring cylinder. Oil separation is considered acceptable if it is less than 5 vol% preferably less than 1 vol% as determined with the measuring cylinder. Longer term stability may be assessed with an accelerated storage test. For accelerated storage testing the samples are centrifuged at 3250 g for 15 min at room temperature. According to our results these tests give a good prediction of the long term stability measured as serum separation and oil separation. Serum or oil separation is considered acceptable as described above using 10 cm high centrifugation tubes.

The term "comprising" whenever used in this document is intended to indicate the presence of stated features, integers, steps, components, but not to preclude the presence or addition of one or more other features, integers, steps, components or groups thereof. Except in the operating and comparative examples, or where otherwise explicitly indicated, all numbers in this description indicating amounts of material ought to be understood as modified by the word "about".

### Examples

In the examples below the following ingredients were used.

Gelatine hydrolysate was purchased from Gelita® (Germany) (SOL DA Pork, 0 bloom, 30 mesh). The oil used was sunflower oil, winterized, fully refined. Soy sauce (fermented) was purchased from Kikkoman (Soy Sauce Standard Liquid) and contained 72% water, 14% NaCl, 6% sugar and 8% protein. Examples according to the invention are denoted as (Inv) and comparative as (Comp).

### Example 1 Emulsion stability across the claimed range of gelatine hydrolysate

| Ingredient (wt%) | 1A (Comp) | 1B(Inv) | 1C(lnv) | 1D(Inv) | 1E (Inv) |
|---|---|---|---|---|---|
| Gelatine hydrolysate | 1.35 | 4.50 | 6.40 | 9.95 | 17.00 |
| Salt | 0.95 | 0.95 | 0.95 | 0.95 | 0.95 |
| Oil | 52.90 | 49.75 | 47.85 | 44.30 | 37.25 |
| Soy sauce | 44.80 | 44.80 | 44.80 | 44.80 | 44.80 |
| Total | 100.00 | 100.00 | 100.00 | 100.00 | 100.00 |
| Oil separation (1wk) | Not visible | Not visible | Not visible | Not visible | Not visible |
| Serum separation (1wk) | Not acceptable | Not visible | Not visible | Not visible | Not visible |
| | | | | | |
| Gelatin hydrolysate (by wt of total water) | 4.0% | 12.2% | 16.6% | 23.6% | 34.5% |
| salt (by wt of total water) | 18.3% | 18.3% | 18.3% | 18.3% | 18.3% |
| oil/water ratio (w/w) | 1.6 | 1.5 | 1.5 | 1.4 | 1.2 |
| Total water content (wt%) | 32.3 | 32.3 | 32.3 | 32.3 | 32.3 |

### Process

The samples of Example 1 were prepared in a Thermomix (TM 31 Vorwerk) as follows:
a) Soy sauce (and optionally water) was added to the mixer
b) if salt was added, it was admixed to the soy sauce (and optional water) until all salt was dissolved (mixer speed 5)
c) gelatine hydrolysate was then added and allowed to dissolve (mixer speed 3 for about 3 min)
d) oil was admixed slowly in about 8-10 min (at mixer speed 5,)
e) finally the mixture was homogenised at mixer speed 10 to form an emulsion (about 2 min).

All steps were carried out at ambient temperature and the temperature was always below 40 °C.

Oil and serum separation were tested both with and without centrifugation as described above. The accelerated test gave the same result as those indicated above after 7 days storage.

### Example 2 Emulsion stability across the claimed range of ratio of oil to water 0.7 to 3.5

| Ingredient (wt%) | 2A (Comp) | 2B(Com p) | 2C(Inv) | 2D (Inv) | 2E (Inv) | 2F (Comp) | 2G(Comp) |
|---|---|---|---|---|---|---|---|
| Gelatine hydrolysate | 9.05 | 8.55 | 8.20 | 5.55 | 5.00 | 4.15 | 3.55 |
| Salt | 1.30 | 1.25 | 1.20 | 0.80 | 0.70 | 0.60 | 0.50 |
| Oil | 26.00 | 30.05 | 33.00 | 54.75 | 59.30 | 66.15 | 71.00 |
| Soy sauce | 63.65 | 60.15 | 57.60 | 38.90 | 35.00 | 29.10 | 24.95 |
| Total | 100 | 100 | 100 | 100 | 100 | 100 | 100 |
| | | | | | | | |
| Oil separation(( 1wk)) | Not visible | Not visible | Not visible | Not visible | Not visible | Not accepta ble | Not accepta ble |
| Serum separation(1 wk) | Not accepta ble | Not accepta ble | Not visible | Not visible | Not visible | Not visible | Not visible |
| | | | | | | | |
| | | | | | | | |
| wt% Gelatin hydrolysate (by wt of total water) | 16.5% | 16.5% | 16.5% | 16.5% | 16.6% | 16.5% | 16.5% |
| wt% salt (by wt of total water) | 18.2% | 18.3% | 18.3% | 18.2% | 18.2% | 18.2% | 18.2% |
| oil/water ratio (w/w) | 0.6 | 0.7 | 0.8 | 2.0 | 2.4 | 3.2 | 4.0 |
| Total water content (wt%) | 45.8 | 43.3 | 41.5 | 28.0 | 25.2 | 21.0 | 18.0 |

Products of example 2 were prepared as described in example 1.

### Example 3 Emulsion stability across the claimed range of 10-30wt% salt

| Ingredient (wt%) | 3A (Inv) | 3B (Inv) | 3C (Inv) |
|---|---|---|---|
| Gelatine hydrolysate | 9.00 | 7.35 | 6.90 |
| Salt | 0.00 | 2.55 | 8.10 |
| Oil | 39.00 | 38.60 | 36.50 |
| Soy sauce | 41.00 | 51.50 | 48.50 |
| Water | 11.00 | 0 | 0 |
| Total | 100 | 100 | 100 |
| | | | |
| Oil separation (6d) | Not visible | Not visible | Not visible |
| Serum separation (6d) | Not visible | Not visible | Not visible |
| | | | |
| wt% Gelatin hydrolysate (by wt of total water) | 18.2% | 16.5% | 16.5% |
| wt% salt (by wt of total water) | 12.4% | 20.8% | 29.9% |
| oil/water ratio (w/w) | 1.0 | 1.0 | 1.0 |
| Total water content (wt%) | 40.52 | 37.08 | 34.92 |

Products of example 3 were prepared as described in example 1.

**Example 4:** Emulsion stability across the claimed range, applying an alternative source of gelatine hydrolysate, i.e. a specialised soup stock high in gelatine hydrolysate (ex Protell Foods AB). The latter soup stock contains - due to specific processing - an unusual high amount of 70wt% of gelatine hydrolysate, 22wt% of water and 6% of salt. This composition has been compared in this example to a normal stock of the Knorr profession range.

| | 4A(Comp) | 4B(Inv) | 4C(Inv) |
|---|---|---|---|
| Ingredient (wt%) | Amount | Amount | Amount |
| Normal professional soup stock | 9 | | |
| High-gelatine hydrolysate Soup stock | | 9.0 | 20.0 |
| salt | 12.2 | 11.0 | 9.4 |
| Oil | 43.4 | 41.0 | 37.5 |
| Water | 35.4 | 39.0 | 33.1 |
| Total | 100 | 100 | 100 |
| | | | |
| Oil separation (5d) | Completely* | Not visible | Not visible |
| Serum separation | Completely* | Not visible | Not visible |
| | | | |
| Oil: water ratio | 1.0 | 1.0 | 1.0 |
| wt% gelatine hydrolysate (by wt of total water) | - | 13.3% | 27.2% |
| wt% protein (by wt of total water) | 0.4 | | |
| wt% Salt (by wt of total water) | 22 | 22.0 | 22.0 |
| Total water (wt%) | 44.0 | 41.0 | 37.5 |

| | | | |
|---|---|---|---|
| (* complete phase separation 2 days after production, no emulsion was visible anymore in a 100 ml measuring cylinder) | | | |

Example 4 was prepared as example 1, with the exception that the soup stock was predissolved in hot water of temperature >85 °C with continuous stirring for around 10 minutes. This premix was cooled down to room temperature before it was used in the process of example 1 wherein water was used rather than soy sauce.

## Claims

1. A pourable liquid oil-in-water emulsion comprising
a) at least 10 wt% gelatine hydrolysate by weight of the total amount of water
b) 10 to 30 wt% of salt by weight of the total amount of water
c) oil,
d) water in an amount of at least 15wt% by weight of the total composition, such that the ratio of oil to water (w/w) is 0.8 to 3.

2. A pourable liquid oil-in-water emulsion according to claim 1 wherein the ratio of oil to water (w/w) is preferably at least is at least 0.9 preferably at least 1, preferably at least 1.1 and preferably at most 2.5, preferably at most 2.

3. A pourable liquid oil-in-water emulsion according to any one of the preceding claims comprising at least 20 wt%, preferably at least 30 wt%, more preferably at least 40 wt% and preferably at most 75 wt%, preferably at most 55 wt%, more preferably at most 50 wt% of oil by weight of the total composition.

4. A pourable liquid oil-in-water emulsion according to any one of the preceding claims comprising at least 13 wt%, preferably at least 15 wt% and preferably at most 40 wt%, more preferably at most 35 wt%, more preferably at most 30 wt%, more preferably at most 25 wt% of gelatine hydrolysate by weight of the total amount of water.

5. A pourable liquid oil-in-water emulsion according to any one of the preceding claims comprising at least 15 wt% at least 20 wt%, preferably at least 30 wt%, preferably at least 40 wt% and preferably at most 60 wt%, preferably at most 55 wt%, preferably at most 50 wt% of water by weight of the total composition.

6. A pourable liquid oil-in-water emulsion according to claim 1 whereby at least some of the water is added as soy sauce and the soy sauce is present in an amount of at least 35 wt%, preferably at least 40 wt%, preferably at least 45 wt% and preferably at most 65 wt%, preferably at most 60 wt%, preferably at most 55 wt% by weight of the total composition.

7. A pourable liquid oil-in-water emulsion according to any one of the preceding claims wherein the hydrolysed gelatine has an average molecular weight of below 20 kg/mol, more preferably below 15 kg/mol, and preferably above 0.15 kg/mol, more preferably above 0.5 kg/mol, even more preferably above 1 kg/mol.

8. A pourable liquid oil-in-water emulsion according to claim 1 comprising
a) at least 15 wt% and at most 25wt% gelatine hydrolysate by weight of the total amount of water having an average molecular weight of below 20 kg/mol and above 0.5 kg/mol.
b) 10 wt% to 30 wt% of salt by weight of the total amount of water
c) 30 w% to 50wt% of oil by weight of the total composition,
d) 30 w% to 50wt% water, by weight of the total composition,
such that the ratio of oil to water (w/w) is at least 1 and at most 2;
whereby preferably at least some of the water is added as soy sauce, whereby the soy sauce is present in an amount of at least 35 wt% and preferably at most 55 wt% by weight of the total composition.

9. A process to prepare the pourable liquid liquid-in-oil emulsion according to any one of the preceding claims comprising the steps of
a) providing a mixture of water, salt and gelatine hydrolysate
b) admixing oil to said mixture
c) homogenising the oil and said mixture to form an oil-in-water emulsion

10. A process according to claim 9 whereby the process is carried out without heating, preferably at a temperature of less than 40 °C, preferably at a temperature of less than 35 °C, more preferably less than 30 °C.

## Patentansprüche

1. Gießbare flüssige Öl-in-Wasser-Emulsion, umfassend
a) mindestens 10 Gew.-% Gelatine-Hydrolysat, bezogen auf das Gewicht der gesamten Menge an Wasser,
b) 10 bis 30 Gew.-% Salz, bezogen auf das Gewicht der gesamten Menge an Wasser,
c) Öl,
d) Wasser in einer Menge von mindestens 15 Gew.-%, bezogen auf das Gewicht der gesamten Zusammensetzung, so dass das Verhältnis von Öl zu Wasser (Gew/Gew) 0,8 bis 3 beträgt.

2. Gießbare flüssige Öl-in-Wasser-Emulsion nach Anspruch 1, wobei das Verhältnis von Öl zu Wasser (Gew/Gew) vorzugsweise mindestens 0,9, vorzugsweise mindestens 1, vorzugsweise mindestens 1,1 und vorzugsweise höchstens 2,5, vorzugsweise höchstens 2, beträgt.

3. Gießbare flüssige Öl-in-Wasser-Emulsion nach irgendeinem der vorhergehenden Ansprüche, umfassend mindestens 20 Gew.-%, vorzugsweise mindestens 30 Gew.-%, bevorzugter mindestens 40 Gew.-% und vorzugsweise höchstens 75 Gew.-%, vorzugsweise höchstens 55 Gew.-%, bevorzugter höchstens 50 Gew.-% Öl, bezogen auf das Gewicht der gesamten Zusammensetzung.

4. Gießbare flüssige Öl-in-Wasser-Emulsion nach irgendeinem der vorhergehenden Ansprüche, umfassend mindestens 13 Gew.-%, vorzugsweise mindestens 15 Gew.-% und vorzugsweise höchstens 40 Gew.-%, bevorzugter höchstens 35 Gew.-%, bevorzugter höchstens 30 Gew.-%, bevorzugter höchstens 25 Gew.-% Gelatine-Hydrolysat, bezogen auf das Gewicht der gesamten Menge an Wasser.

5. Gießbare flüssige Öl-in-Wasser-Emulsion nach irgendeinem der vorhergehenden Ansprüche, umfassend mindestens 15 Gew.-%, mindestens 20 Gew.-%, vorzugsweise mindestens 30 Gew.-%, vorzugsweise mindestens 40 Gew.-% und vorzugsweise höchstens 60 Gew.-%, vorzugsweise höchstens 55 Gew.-%, vorzugsweise höchstens 50 Gew.-% Wasser, bezogen auf das Gewicht der gesamten Zusammensetzung.

6. Gießbare flüssige Öl-in-Wasser-Emulsion nach Anspruch 1, wobei mindestens ein Teil des Wassers in Form von Sojasoße zugegeben wird und die Sojasoße in einer Menge von mindestens 35 Gew.-%, vorzugsweise mindestens 40 Gew.-%, vorzugsweise mindestens 45 Gew.-% und vorzugsweise höchstens 65 Gew.-%, vorzugsweise höchstens 60 Gew.-%, vorzugsweise höchstens 55 Gew.-%, bezogen auf das Gewicht der gesamten Zusammensetzung, vorliegt.

7. Gießbare flüssige Öl-in-Wasser-Emulsion nach irgendeinem der vorhergehenden Ansprüche, wobei die hydrolysierte Gelatine ein durchschnittliches Molekulargewicht unter 20 kg/Mol, bevorzugter unter 15 kg/Mol und vorzugsweise über 0,15 kg/Mol, bevorzugter über 0,5 kg/Mol, sogar bevorzugter über 1 kg/Mol, aufweist.

8. Gießbare flüssige Öl-in-Wasser-Emulsion nach Anspruch 1, umfassend
a) mindestens 15 Gew.-% und höchstens 25 Gew.-% Gelatine-Hydrolysat, bezogen auf das Gewicht der gesamten Menge an Wasser, mit einem durchschnittlichen Molekulargewicht unter 20 kg/Mol und über 0,5 kg/Mol,
b) 10 Gew.-% bis 30 Gew.-% Salz, bezogen auf das Gewicht der gesamten Menge an Wasser,
c) 30 Gew.-% bis 50 Gew.-% Öl, bezogen auf das Gewicht der gesamten Zusammensetzung,
d) 30 Gew.-% bis 50 Gew.-% Wasser, bezogen auf das Gewicht der gesamten Zusammensetzung,
so dass das Verhältnis von Öl zu Wasser (Gew/Gew) mindestens 1 und höchstens 2 beträgt,
wobei vorzugsweise mindestens ein Teil des Wassers in Form von Sojasoße hinzugefügt wird, wobei die Sojasoße in einer Menge von mindestens 35 Gew.-% und vorzugsweise höchstens 55 Gew.-%, bezogen auf das Gewicht der gesamten Zusammensetzung, vorliegt.

9. Verfahren zur Herstellung der essbaren flüssigen Flüssigkeit-in-ÖI-Emulsion nach irgendeinem der vorhergehenden Ansprüche, umfassend die Schritte:
a) Bereitstellen einer Mischung von Wasser, Salz und Gelatine-Hydrolysat,
b) Zumischen von Öl zu dieser Mischung,
c) Homogenisieren des Öls und der Mischung, um eine Öl-in-Wasser-Emulsion herzustellen.

10. Verfahren nach Anspruch 9, wobei das Verfahren ohne Erhitzen, vorzugsweise bei einer Temperatur von weniger als 40°C, vorzugsweise bei einer Temperatur von weniger als 35°C, bevorzugter von weniger als 30°C, durchgeführt wird.

## Revendications

1. Emulsion huile-dans-eau liquide versable comprenant
a) au moins 10 % en masse d'hydrolysat de gélatine en masse de la quantité totale d'eau
b) de 10 à 30 % en masse de sel en masse de la quantité totale d'eau
c) de l'huile,
d) de l'eau dans une quantité d'au moins 15 % en masse en masse de la composition totale, de sorte que le rapport d'huile à eau (masse/masse) est de 0,8 à 3.

2. Emulsion huile-dans-eau liquide versable selon la revendication 1 dans laquelle le rapport d'huile à eau (masse/masse) est de préférence d'au moins 0,9 de préférence d'au moins 1, de préférence d'au moins 1,1 et de préférence d'au plus 2,5, de préférence d'au plus 2.

3. Emulsion huile-dans-eau liquide versable selon l'une quelconque des revendications précédentes comprenant au moins 20 % en masse, de préférence au moins 30 % en masse, encore mieux au moins 40 % en masse et de préférence au plus 75 % en masse, de préférence au plus 55 % en masse, encore mieux au plus 50 % en masse d'huile en masse de la composition totale.

4. Emulsion huile-dans-eau liquide versable selon l'une quelconque des revendications précédentes comprenant au moins 13 % en masse, de préférence au moins 15 % en masse et de préférence au plus 40 % en masse, encore mieux au plus 35 % en masse, bien mieux encore au plus 30 % en masse, bien mieux encore au plus 25 % en masse d'hydrolysat de gélatine en masse de la composition totale d'eau.

5. Emulsion huile-dans-eau liquide versable selon l'une quelconque des revendications précédentes comprenant au moins 15 % en masse au moins 20 % en masse, de préférence au moins 30% en masse, de préférence au moins 40 % en masse et de préférence au plus 60 % en masse, de préférence au plus 55 % en masse, de préférence au plus 50 % en masse d'eau en masse de la composition totale.

6. Emulsion huile-dans-eau liquide versable selon la revendication 1 sur quoi au moins une certaine quantité de l'eau est ajoutée comme sauce de soja et la sauce de soja est présente dans une quantité d'au moins 35 % en masse, de préférence d'au moins 40 % en masse, de préférence d'au moins 45 % en masse et de préférence d'au plus 65 % en masse, de préférence d'au plus 60 % en masse, de préférence d'au plus 55 % en masse en masse de la composition totale.

7. Emulsion huile-dans-eau liquide versable selon l'une quelconque des revendications précédentes dans laquelle la gélatine hydrolysée présente une masse moléculaire moyenne inférieure à 20 kg/mol, encore mieux inférieure à 15 kg/mol, et de préférence supérieure à 0,15 kg/mol, encore mieux supérieure à 0,5 kg/mol, bien mieux encore supérieure à 1 kg/mol.

8. Emulsion huile-dans-eau liquide versable selon la revendication 1 comprenant
a) au moins 15 % en masse et au plus 25 % en masse d'hydrolysat de gélatine en masse de la quantité totale d'eau ayant une masse moléculaire moyenne inférieure à 20 kg/mol et supérieure à 0,5 kg/mol.
b) de 10 % en masse à 30 % en masse de sel en masse de la quantité totale d'eau
c) de 30 % en masse à 50 % en masse d'huile en masse de la composition totale d'eau,
d) de 30 % en masse à 50 % en masse d'eau, en masse de la composition totale,
de sorte que le rapport d'huile à eau (masse/masse) est d'au moins 1 et d'au plus 2 ;
sur quoi de préférence au moins une certaine quantité de l'eau est ajoutée comme sauce de soja, sur quoi la sauce de soja est présente dans une quantité d'au moins 35 % en masse et de préférence d'au plus 55 % en masse en masse de la composition totale.

9. Procédé pour préparer l'émulsion liquide-dans-huile liquide versable selon l'une quelconque des revendications précédentes comprenant les étapes de
a) fourniture d'un mélange d'eau, de sel et d'hydrolysat de gélatine
b) mélange d'huile audit mélange
c) homogénéisation de l'huile et dudit mélange pour former une émulsion huile-dans-eau

10. Procédé selon la revendication 9 sur quoi le procédé est réalisé sans chauffage, de préférence à une température inférieure à 40°C, de préférence à une température inférieure à 35°C, encore mieux inférieure à 30°C.
